# EUROPÄISCHE PATENTSCHRIFT

(11) **EP 0 405 603 B1**
(45) Veröffentlichungstag und Bekanntmachung des Hinweises auf die Patenterteilung: **26.10.1994**
(21) Anmeldenummer: 90112501.3
(22) Anmeldetag: 29.06.1990
(51) Int. Cl.: B60T 13/57

(54) **Ventilbaugruppe zum Steuern eines pneumatischen Bremskraftverstärkers**
Control valve assembly of a pneumatic brake booster
Ensemble valve de commande d'un servomoteur de freinage pneumatique

(30) Priorität: 30.06.1989 DE 8908040 U
(43) Veröffentlichungstag der Anmeldung: 02.01.1991
(73) Patentinhaber: LUCAS INDUSTRIES public limited company, Birmingham, B19 2XF West Midlands (GB)
(72) Erfinder: Kaub, Manfred, D-5401 Rhens (DE)
(74) Vertreter: Goetz, Rupert, Dipl.-Ing.

(56) Entgegenhaltungen:
- WO-A-86/07320
- FR-A- 2 030 677
- FR-A- 2 206 219

## Beschreibung

Die Erfindung betrifft eine Ventilbaugruppe zum Steuern eines pneumatischen Bremskraftverstärkers mit
- einem Ventilgehäuse, in dem ein erster und ein zweiter Ventilsitz angeordnet sind,
- einem an beide Ventilsitze anlegbaren Ventilkörper, der
   -- in einer Stellung eines Betätigungsgliedes nur vom ersten Ventilsitz abgehoben ist, wodurch zwei Kammern des Bremskraftverstärkers miteinander verbunden und beide von einem Lufteinlaß getrennt sind, und
   -- in einer anderen Stellung des Betätigungsgliedes nur vom zweiten Ventilsitz abgehoben ist, wodurch die beiden Kammern voneinander getrennt sind und eine von ihnen mit dem Lufteinlaß verbunden ist, und
- einem zusätzlichen Belüftungskanal, der in die mit dem Lufteinlaß verbindbare Kammer des Bremskraftverstärkers mündet und von einem zusätzlichen Ventil gesteuert ist, das durch eine Bewegung des Betätigungsgliedes zu öffnen ist, welche über die zum Abheben des Ventilkörpers zum zweiten Ventilsitz erforderliche Bewegung hinausgeht.

Wenn hier und im folgenden von zwei Kammern die Rede ist, so kann es sich entweder um zwei einzelne Kammern oder um zwei Gruppen miteinander verbundener Kammern handeln, wie sie bei Bremskraftverstärkern in Tandembauweise vorhanden sind.

Ventilbaugruppen dieser Gattung werden beispielsweise bei Bremskraftverstärkern eingesetzt, deren erste Kammer ständig an eine Unterdruckquelle angeschlossen ist und deren zweite Kammer in einer Ruhestellung der Ventilbaugruppe mit der ersten Kammer verbunden und infolgedessen ebenfalls evakuiert wird, in einer Betriebsstellung der Ventilbaugruppe jedoch von der ersten Kammer getrennt und mit dem Lufteinlaß vebunden wird. Beim Betätigen der Ventilanordnung strömt somit Umgebungsluft in die erste Kammer, so daß der dort entstehende Druck eine die beiden Kammern voneinander trennende bewegliche Wand verschiebt, die ihrerseits ein Kraftabgabeglied zum Betätigen eines Hauptbremszylinders bewegt. Am Lufteinlaß ist üblicherweise ein Luftfilter angordnet, der unvermeidlich einen gewissen Strömungswiderstand hat. Auch sind die Strömungsquerschnitte im Bereich der beiden Ventilsitze aus Platzgründen eng begrenzt, so daß sich auch aus diesem Grund der Druckaufbau in der ersten Kammer verzögert.

Man hat es deshalb bisher hinnehmen müssen, daß nur von Umgebungsluft gespeiste bekannte Bremskraftverstärker ihre volle Wirksamkeit erst allmählich erreichen, so daß in einer Anfangsphase einer raschen Notbremsung ein mehr oder weniger großer Teil der vom Fahrer auf das Bremspedal aufgebrachten Kraft über mechanische Zwischenglieder auf den Hauptbremszylinder übertragen werden muß.

Damit der Bremskraftverstärker Notbremsungen kräftiger unterstützen kann, ist eine aus der FR-A-2206219 bekannte Ventilbaugruppe der eingangs genannten Gattung geschaffen worden, bei der als zusätzlicher Belüftungskanal eine axiale Bohrung im Betätigungsglied vorgesehen ist, die an eine Druckluftquelle angeschlossen und von einem innerhalb des Ventilgehäuses rings um das Betätigungsglied angeordneten zusätzlichen Ventil gesteuert ist. Des Betätigungsglied ist, wie üblich, eine Stange von verhältnismäßig geringem Durchmesser; deshalb hat seine axiale Bohrung notwendigerweise einen geringen Querschnitt und setzt der Druckluftstörmung einen entsprechend hohen Widerstand entgegen. Entsprechenes gilt für das zusätzliche Ventil. Die Druckluft, die das zusätzliche Ventil durchströmt hat, kann nur durch die verhältnismäßig engen Kanäle, die für das Einströmen von Umgebungsluft bei normaler Bremsbetätigung vorgesehen sind, in die hintere Kammer des Bremskraftverstärkers strömen, was einen weiteren Druckverlust hervorruft. Damit die Druckluft nicht durch das nach hinten weit offene Ventilgehäuse entweichen kann, gehört zu der aus der FR-A-2.206.219 bekannten Ventilanordnung ein weiteres, also viertes, vom Betätigungsglied gesteuertes Ventil, das der Druckluft den Weg nach hinten versperrt, dabei aber auch die Umgebungsluft am Einströmen hindert, sobald das Betätigungsglied seine für das Einströmen der Druckluft erforderliche Stellung erreicht. Dies bedeutet aber, daß der bekannte Bremskraftverstärker bei kräftiger Betätigung vollständig versagt, wenn die Druckluftquelle ausgefallen ist.

Der Erfindung liegt die Aufgabe zugrunde, eine Ventilbaugruppe zum Steuern eines pneumatischen Bremskraftverstärkers derart zu gestalten, daß der Bremskraftverstärker Notbremsungen rascher unterstützt, sich aber bei normalen Bremsungen nicht wesentlich anders als in der gewohnten Weise verhält.

Die Aufgabe ist erfindungsgemäß bei einer Ventilbaugruppe der eingangs beschriebenen Gattung dadurch gelöst, daß
- das zusätzliche Ventil einen außerhalb des Ventilgehäuses angeordneten, ringförmigen dritten Ventilsitz aufweist,
- das Ventilgehäuse von einer Hülse mit radialem Abstand umschlossen ist, die als zusätzlicher Ventilkörper gegenüber dem Ventilgehäuse axial verschiebbar und in Richtung zum dritten Ventilsitz hin vorgespannt ist,
- der zusätzliche Belüftungskanal zwischen Ventilgehäuse und Hülse ausgebildet ist, und
- das Betätigungsglied mit der Hülse durch ein Übertragungsglied verbunden ist.

Auf diese Weise läßt sich die erfindungsgemäße Ventilbaugruppe besonders einfach und raumsparend gestalten und mit einem Bremskraftverstärker üblicher Abmessungen zusammenbauen.

Damit wird erreicht, daß bei Bremsungen, die durch eine über das übliche Maß hinausgehende Bewegung des Betätigungsgliedes bewirkt werden, ein zusätzlicher Luftstrom unmittelbar in die mit dem normalen Lufteinlaß verbundene Kammer eingeleitet wird, so daß in besonders kurzer Zeit der größtmögliche Druckunterschied zwischen den Kammern aufgebaut werden kann. Der zusätzliche Luftstrom kann aus der Umgebungsluft stammen, kann aber auch ein Druckluftstrom sein, wenn eine geeignete Druckluftquelle zur Verfügung steht. Die erfindungsgemäße Gestaltung der Ventilbaugruppe hat den zusätzlichen Vorteil, daß saugende oder zischende Geräusche vermieden werden, die bei kräftiger Betätigung bekannter gattungsgemäßer Ventilbaugruppen häufig infolge hoher Strömungsgeschwindigkeiten der durch die bisher vorhandenen Kanäle einströmenden Luft hervorgerufen werden.

Die Erfindung ist vorzugsweise dadurch weitergebildet, daß der dritte Ventilsitz an einem Ende des Ventilgehäuses, dem Lufteinlaß benachbart angeordnet ist und der zusätzliche Belüftungskanal von einem radial äußeren Bereich des Lufteinlasses gespeist ist.

Dabei ist es vorteilhaft, wenn der dritte Ventilsitz flanschartig an einem rohrförmigen Einsatz ausgebildet ist, der innerhalb des Ventilgehäuses durch eine am Betätigungsglied abgestützte Feder in einer zur Vorspannung der Hülse entgegengesetzten Richtung vorgespannt ist. Auf diese Weise läßt sich der dritte Ventilsitz montieren, ohne daß das Ventilgehäuse gegenüber bekannten Ausführungsformen verändert werden müßte.

Es ist ferner zweckmäßig, wenn das Übertragungsglied mit dem zweiten Ventilsitz fest verbunden ist und sich mit axialem Spiel durch je eine radiale Aussparung des Ventilgehäuses und der Hülse erstreckt, wobei das axiale Spiel des Übertragungsgliedes gegenüber dem Ventilgehäuse größer als das axiale Spiel des Übertragungsgliedes gegenüber der Hülse ist.

Ein Ausführungsbeispiel der Erfindung wird im folgenden anhand schematischer Zeichnungen mit weiteren Einzelheiten erläutert. In jeder der Zeichnungen ist ein Vakuum-Bremskraftverstärker üblicher Bauart mit einer erfindungsgemäßen Ventilbaugruppe in folgenden Zuständen dargestellt:
- Fig. 1: unbetätigt, vor dem Anlegen eines Vakuums,
- Fig. 2: unbetätigt, bei angelegtem Vakuum,
- Fig. 3: bei normaler Bremsbetätigung,
- Fig. 4: bei plötzlicher Bremsbetätigung und
- Fig. 5: unmittelbar nach einer Bremsbetätigung,
wobei in den einzelnen Figuren je drei Ausschnitte X, Y und Z vergrößert herausgezeichnet sind.

Der dargestellte Bremskraftverstärker 10 hat zwei Gehäuseteile 12 und 14, die in bezug auf eine Achse A im wesentlichen rotationssymmetrisch gestaltet sind und an ihrem äußeren Rand eine Membran 16 zwischen sich eingespannt halten. Die Membran 16 bildet zusammen mit einer starren Stützplatte 18 eine bewegliche Wand; durch diese erstrecken sich parallel zur Achse A Verbindungsstangen 20 hindurch, welche die Gehäuseteile 12 und 14 miteinander verbinden und durch je einen Faltenbalg 22 gegen die bewegliche Wand 16, 18 abgedichtet sind. Die bewegliche Wand 16, 18 trennt zwei Kammern 24 und 26 voneinander, von denen die in üblicher Einbaulage vordere Kammer 24 ständig mit einer Vakuumquelle, beispielsweise mit der Saugleitung eines Ottomotors, verbunden ist und die hintere Kammer 26 durch eine Ventilbaugruppe 28 wahlweise mit der vorderen Kammer 24 oder mit der Umgebungsluft verbindbar ist.

Zur Ventilbaugruppe 28 gehört ein rohrförmiges Ventilgehäuse 30, das in bezug auf die Achse A im wesentlichen rotationssymmetrisch gestaltet ist und mit der beweglichen Wand 16, 18 fest und dicht verbunden ist. Im Ventilgehäuse 30 ist ein ringförmiger erster Ventilsitz 32 ausgebildet.

Ein zweiter, ebenfalls ringförmiger Ventilsitz 34 von kleinerem Durchmesser ist gleichachsig mit dem ersten Ventilsitz 32 an einem Stößel 36 ausgebildet, der mittels eines Betätigungsgliedes 38 längs der Achse A verstellbar ist. Das Betätigungsglied 38 läßt sich in üblicher Weise mit dem Bremspedal eines Kraftfahrzeugs verbinden.

Beiden Ventilsitzen 32 und 34 ist ein gemeinsamer Ventilkörper 40 zugeordnet, der zusammen mit dem ersten Ventilsitz 32 einen radial äußeren Ringraum 42 innerhalb des Ventilgehäuses 30 von einem ringförmigen Zwischenraum 44 zwischen den beiden Ventilsitzen trennen kann, und der zusammen mit dem zweiten Ventilsitz 34 einen Innenraum 46 vom Zwischenraum 44 trennen kann. Der radial äußere Ringraum 42 ist an die vordere Kammer 24, der ringförmige Zwischenraum 44 an die hintere Kammer 26 angeschlossen. Der Innenraum 46 steht über einen Filter 48 in einem ringförmigen Lufteinlaß 50 ständig mit der Umgebung in Verbindung.

Der Ventilkörper 40 ist durch eine Manschette 52 aus Gummi oder einem Elastomeren mit einem Stützring 54 verbunden, der in das Ventilgehäuse 30 dicht und fest eingebaut ist. Durch eine erste Kegelfeder 56, die sich an einer Schulter 58 des Betätigungsgliedes 38 abstützt, ist der Ventilkörper 40 in Richtung zu den beiden Ventilsitzen 32 und 34 hin vorgespannt.

In das Ventilgehäuse 30 ist von seinem in den Zeichnungen rechten, in normaler Einbaulage hinteren Ende her ein rohrförmiger Einsatz 60 eingeschoben, dessen hinteres Ende flanschartig nach außen umgebogen und am Ende des Ventilgehäuses 30 dadurch anliegend gehalten ist, daß eine zweite Kegelfeder 62 zwischen einem Kragen am inneren Ende des Einsatzes 60 und einem am Betätigungsglied 38 befestigten Sicherungsring 64 eingespannt ist. Am radial nach außen ragenden Flansch des Einsatzes 60 ist ein dritter Ventilsitz 66 ausgebildet.

Vom radial äußeren Rand des Lufteinlasses 50 erstreckt sich ein Faltenbalg 68 bis zu einem Kragen 70, der am Gehäuseteil 14 ausgebildet ist. Auf diese Weise ist ein Ringraum rings um das Ventilgehäuse 30 gegen das Eindringen von Schmutz und ungefilterter Luft geschützt. Innerhalb dieses Ringraumes ist eine Hülse 72 angeordnet, die durch eine Ringdichtung 74 gegen den Kragen 70 abgedichtet ist, ohne dadurch an Bewegungen längs der Achse A gehindert zu sein. Die Hülse 72 ist durch eine am Gehäuseteil 14 abgestützte Feder 76 nach hinten, in Richtung zum dritten Ventilsitz 66 hin, vorgespannt und bildet mit ihrem hinteren Ende 78 einen zusätzlichen, normalerweise gegen den dritten Ventilsitz 66 abdichtenden Ventilkörper. Zwischen dem Ventilgehäuse 30 und der Hülse 72 ist ein im wesentlichen zylindrischer Ringraum freigelassen, der einen in die hintere Kammer 26 mündenden zusätzlichen Belüftungskanal 80 bildet.

Der Stößel 36 hat eine Ringnut, in die ein ungefähr haarnadelförmiges Übertragungsglied 82 fest und spielfrei eingerastet ist. Vom Stößel 36 erstreckt sich das Übertragungsglied 82 radial durch eine Aussparung 84 im Ventilgehäuse 30 und eine Aussparung 86 in der Hülse 82 hindurch bis annähernd zur Innenwand des Kragens 70; dort ist ein ringförmiger Anschlag 88 befestigt, der die Bewegung des Übertragungsgliedes 82, und somit des Stößels 36, nach hinten begrenzt. Das Übertragungsglied 82 hat in der Aussparung 84 und 86 je ein axiales Spiel B bzw. C, wobei B größer als C ist.

Im vorderen Endbereich des Ventilgehäuses 30 ist ein Kraftabgabeglied 90 mittels einer Halterung 92 befestigt. Zwischen dem Stößel 36 und dem Kraftabgabeglied 90 ist ein Elastomerkörper 94 angeordnet, der im übrigen vom Ventilgehäuse 30 umschlossen ist und einen Kraftübersetzer zwischen dem Betätigungsglied 38 und dem Kraftabgabeglied 90 bildet. Die gesamte Baugruppe, zu der die bewegliche Wand 16, 18 und das Ventilgehäuse 30 gehören, ist von einer Rückstellfeder 96 nach hinten vorgespannt.

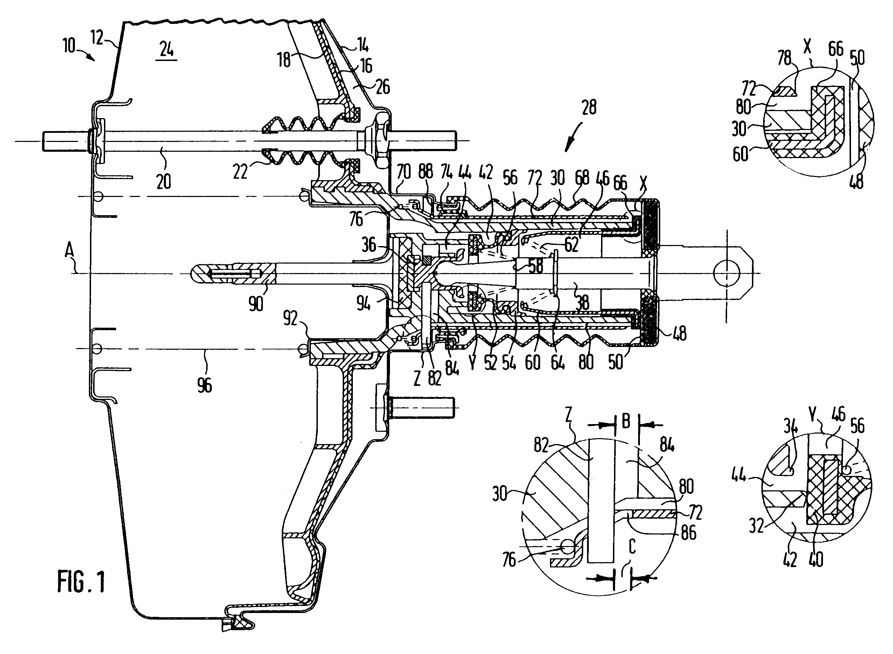

Solange in der vorderen Kammer 24 des Bremskraftverstärkers 10 das vorgesehene Vakuum nicht wirksam ist, beispielsweise vor dem Anlassen des Motors des zugehörigen Kraftfahrzeugs, nehmen die beweglichen Teile des Bremskraftverstärkers 10 und der Ventilbaugruppe 28 die aus Fig. 1 ersichtliche Stellung ein. Der Ventilkörper 40 liegt am ersten Ventilsitz 32, nicht aber am zweiten Ventilsitz 34 an; das von der Hülse 72 und dem dritten Ventilsitz 66 gebildete zusätzliche Ventil ist offen. Die hintere Kammer 26 ist somit sowohl über den Innenraum 46 des Ventilgehäuses 30 wie auch über den zusätzlichen Belüftungskanal 80 mit der Umgebung verbunden. Die Verbindung zwischen den beiden Kammern 24 und 26 ist unterbrochen.

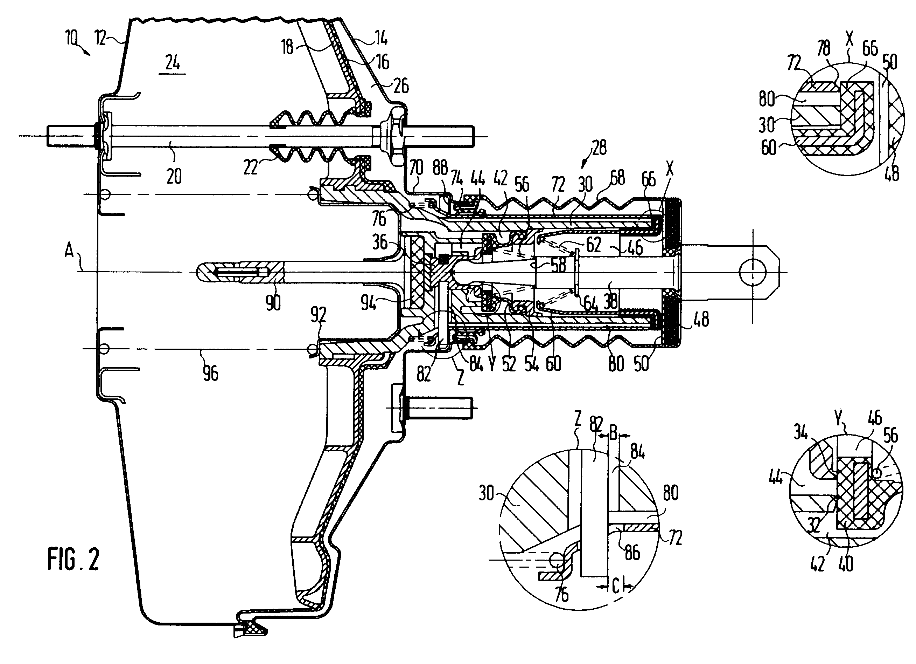

Wenn nun, beispielsweise durch Anlassen des erwähnten Ottomotors, in der vorderen Kammer 24 ein Unterdruck entsteht, wird die bewegliche Wand 16, 18 zusammen mit dem Ventilgehäuse 30 gegen den anfangs geringen Widerstand der Rückstellfeder 96 um ein kleines Stück vorwärtsbewegt, während das Betätigungsglied 38 samt Stößel 36 seine Ruhestellung beibehält. Der Ventilkörper 40, der bisher gemäß Fig. 1 nur an dem ersten Ventilsitz 32 angelegen hat, legt sich infolgedessen leicht an den zweiten Ventilsitz 34 an, und der dritte Ventilsitz 66 legt sich an das Ende 78 der Hülse 72 an, die ihre Ruhestellung ebenfalls beibehält. Es stellt sich ein Gleichgewichtszustand gemäß Fig. 2 ein, in dem die vordere Kammer 24 in dem von der Vakuumquelle bestimmten Ausmaß evakuiert ist, und in der hinteren Kammer 26 ein Druck herrscht, der etwas größer als der Druck in der vorderen Kammer 24, jedoch deutlich geinger als der Atmosphärendruck ist. Der Bremskraftverstärker 10 ist nun bereit, ohne weitere Verzögerung einen nicht dargestellten Hauptbremszylinder zu betätigen, auf den das Kraftabgabeglied 90 in üblicher Weise einwirkt.

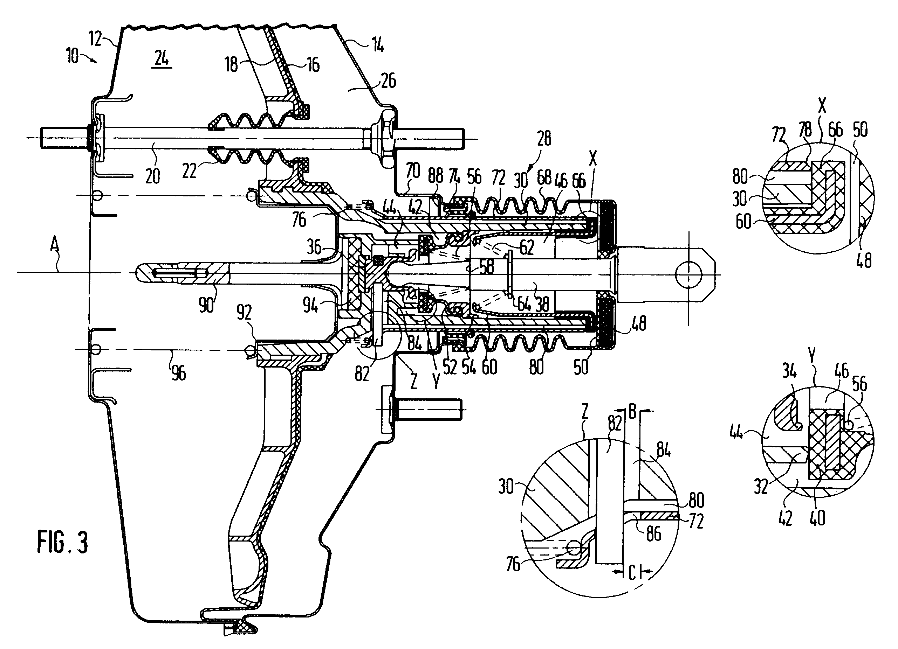

Sobald das Bremspedal auf normale Weise betätigt und dadurch das Betätigungsglied 38 um ein kleines Stück vorwärtsgeschoben wird, trennt sich der zweite Ventilsitz 34 gemäß Fig. 3 vom Ventilkörper 40. Dieser liegt nun mit der vollen Kraft der ersten Kegelfeder 56 ausschließlich am ersten Ventilsitz 32 an und trennt dadurch die beiden Kammern 24 und 26 vollständig dicht voneinander, während Umgebungsluft, die durch den Filter 48 hindurch angesaugt wird, über den Innenraum 46 und den ringförmigen Zwischenraum 44 in die hintere Kammer 26 gelangt und die bewegliche Wand 16, 18 samt Ventilgehäuse 30 und Kraftabgabeglied 90 vorwärtsschiebt und dadurch den angeschlossenen Hauptbremszylinder betätigt. Währenddessen bleibt die dichte Anlage des dritten Ventilsitzes 66 am hinteren Ende 78 der Hülse 72 bestehen, so daß der zusätzliche Belüftungskanal 80 wirkungslos bleibt.

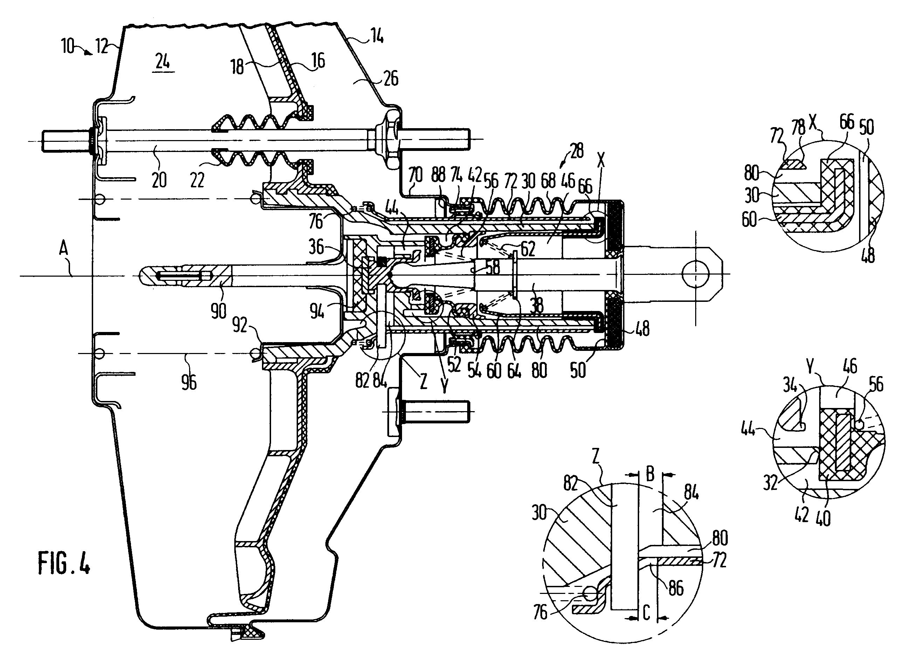

Wenn jedoch das Bremspedal heftiger betätigt und somit über das Betätigungsglied 38 der Stößel 36 weiter nach vorne geschoben wird, stößt das Übertragungsglied 82 gegen den vorderen Rand der Aussparung 86 in der Hülse 72 und nimmt diese nach vorne mit, so daß das hintere Ende 78 der Hülse 72 gemäß Fig. 4 vom dritten Ventilsitz 76 abgehoben wird. Infolgedessen strömt nun Umgebungsluft nicht nur vom radial inneren Bereich des Filters 48 durch den Innenraum 46 und weiter durch den ringförmigen Zwischenraum 44 in die hintere Kammer 26, sondern zusätzliche Umgebungsluft strömt durch den radial äußeren Bereich des Filters 48 und weiter durch den zusätzlichen Belüftungskanal 80 ebenfalls in die hintere Kammer 26, so daß der dort herrschende Druck sich sehr rasch dem Umgebungsdruck angleicht und die bewegliche Wand 16, 18 samt Kraftabgabeglied 90 entsprechend schnell vorwärtsgeschoben wird.

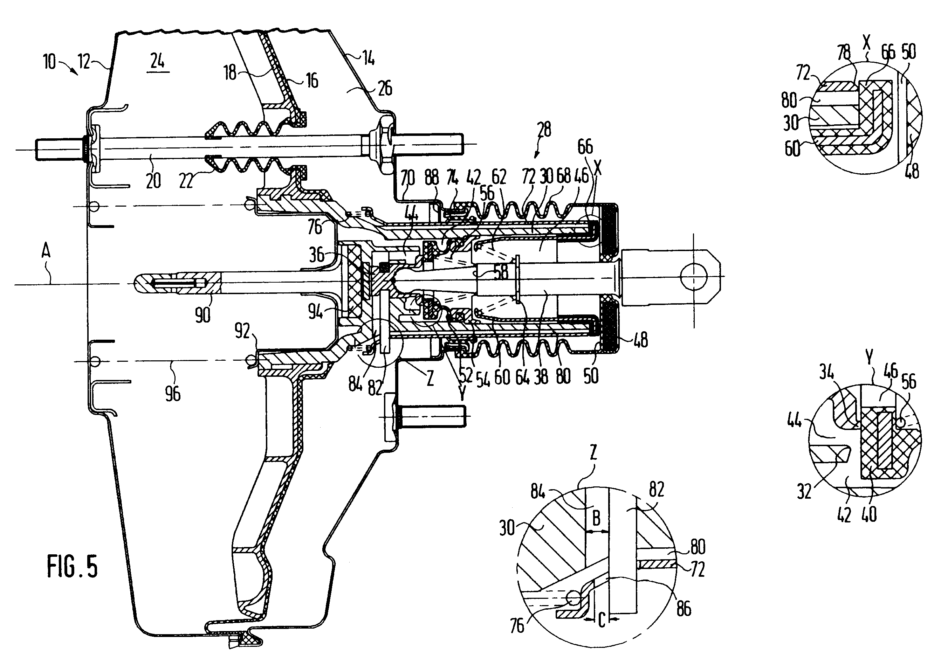

Wenn nach einer Bremsbetätigung das Bremspedal freigegeben wird, stellen sich vorübergehend die in Fig. 5 abgebildeten Verhältnisse ein; der Ventilkörper 40 ist vom ersten Ventilsitz 32 abgehoben und liegt dicht am zweiten Ventilsitz 34 an, während das hintere Ende 78 der Hülse 72 dicht am dritten Ventilsitz 66 anliegt. Die hintere Kammer 26 ist infolgedessen von der Umgebung getrennt und mit der vorderen Kammer 24 verbunden, so daß ein Druckausgleich stattfindet und die beweglichen Bauteile in die Gleichgewichtsstellung gemäß Fig. 2 zurückkehren.

## Patentansprüche

1. Ventilbaugruppe zum Steuern eines pneumatischen Bremskraftverstärkers (10) mit
- einem Ventilgehäuse (30), in dem ein erster und ein zweiter Ventilsitz (32, 34) angeordnet sind,
- einem an beide Ventilsitze (32, 34) anlegbaren Ventilkörper (40), der
-- in einer Stellung eines Betätigungsgliedes (38) nur vom ersten Ventilsitz (32) abgehoben ist, wodurch zwei Kammern (24, 26) des Bremskraftverstärkers (10) miteinander verbunden und beide von einem Lufteinlaß (50) getrennt sind, und
-- in einer anderen Stellung des Betätigungsgliedes (38) vom zweiten Ventilsitz (34) abgehoben ist, wodurch die beiden Kammern (24, 26) voneinander getrennt sind und eine von ihnen mit dem Lufteinlaß (50) verbunden ist, und
- einem zusätzlichen Belüftungskanal (80), der in die mit dem Lufteinlaß (50) verbindbare Kammer (26) des Bremskraftverstärkers (10) mündet und von einem zusätzlichen Ventil (66, 72) gesteuert ist, das durch eine Bewegung des Betätigungsgliedes (38) zu öffnen ist, welche über die zum Abheben des Ventilkörpers (40) vom zweiten Ventilsitz (34) erforderliche Bewegung hinausgeht,
dadurch **gekennzeichnet**, daß
- das zusätzliche Ventil (66, 72) einen außerhalb des Ventilgehäuses (30) angeordneten ringförmigen dritten Ventilsitz (66) aufweist,
- das Ventilgehäuse (30) von einer Hülse (72) mit radialem Abstand umschlossen ist, die als zusätzlicher Ventilkörper gegenüber dem Ventilgehäuse (30) axial verschiebbar und in Richtung zum dritten Ventilsitz (66) hin vorgespannt ist,
- der zusätzliche Belüftungskanal (80) zwischen Ventilgehäuse (30) und Hülse (72) ausgebildet ist, und
- das Betätigungsglied (38) mit der Hülse (72) durch ein Übertragungsglied (82) verbunden ist.

2. Ventilbaugruppe nach Anspruch 1,
dadurch **gekennzeichnet**, daß
der dritte Ventilsitz (66) an einem Ende des Ventilgehäuses (30), dem Lufteinlaß (50) benachbart, angeordnet ist und der zusätzliche Belüftungskanal (80) von einem radial äußeren Bereich des Lufteinlasses (50) gespeist ist.

3. Ventilbaugruppe nach Anspruch 2,
dadurch **gekennzeichnet**, daß
der dritte Ventilsitz (66) flanschartig an einem rohrförmigen Einsatz (60) ausgebildet ist, der innerhalb des Ventilgehäuses (30) durch eine am Betätigungsglied (38) abgestützte Feder (62) in einer zur Vorspannung der Hülse (72) entgegengesetzten Richtung vorgespannt ist.

4. Ventilbaugruppe nach einem der Ansprüche 1 bis 3,
dadurch **gekennzeichnet**, daß
das Übertragungsglied (82) mit dem zweiten Ventilsitz (34) fest verbunden ist und sich mit axialem Spiel (B, C) durch je eine radiale Aussparung (84, 86) des Ventilgehäuses (30) und der Hülse (72) erstreckt, wobei das axiale Spiel (B) des Übertragungsgliedes (82) gegenüber dem Ventilgehäuse (30) größer als das axiale Spiel (C) des Übertragungsgliedes (82) gegenüber der Hülse (72) ist.

5. Ventilbaugruppe nach Anspruch 1,
dadurch **gekennzeichnet**, daß
der zusätzliche Belüftungskanal (80) über das zusätzliche Ventil (66, 72) an eine Druckluftquelle angeschlossen ist.

## Claims

1. A valve assembly for control of a pneumatic brake pressure booster (10), comprising
- a valve housing (30) in which first and second valve seats (32, 34) are arranged,
- a valve closing member (40) which is adapted for engagement with both valve seats (32, 34) and which
-- is lifted off the first valve seat (32) only, when an actuating member (38) is in one position, whereby two chambers (24, 26) of the brake pressure booster (10) communicate with each other and are both shut off from an air inlet (50), and
-- is lifted off the second valve seat (34), when the actuating member (38) is in another position, whereby the two chambers (24, 26) are isolated from each other and one of them is connected to the air inlet (50), and
- an additional ventilation duct (80) which opens into that chamber (26) of the brake pressure booster (10) adapted to be connected to the air inlet (50) and is controlled by an additional valve (66, 72) adapted to be opened by movement of the actuator member (38) beyond the movement required to lift the valve closing member (40) off the second valve seat (34),
**characterized** in that
- the additional valve (66, 72) comprises an annular third valve seat (66) disposed outside the valve housing (30),
- the valve housing (30) is enclosed by a sleeve (72) which is radially spaced from the valve housing (30) and movable in axial direction with respect to the same, being biased towards the third valve seat (66),
- the additional ventilation duct (80) is defined between the valve housing (30) and the sleeve (72), and
- the actuating member (38) is connected to the sleeve (72) by a transmitting member (82).

2. The valve assembly as claimed in claim 1, characterized in that the third valve seat (66) is disposed at one end of the valve housing (30) adjacent the air inlet (50), and the additional ventilation duct (80) is fed from a radially outer area of the air inlet (50).

3. The valve assembly as claimed in claim 2, characterized in that the third valve seat (66) is formed like a flange at a tubular insert (60) which is biased inside the valve housing (30), in opposite direction to the bias of the sleeve (72), by a spring (62) supported on the actuating member (38).

4. The valve assembly as claimed in any one of claims 1 to 3, characterized in that the transmitting member (82) is connected firmly to the second valve seat (34) and extends with axial clearance (B, C) through a radial recess (84, 86) in the valve housing (30) and the sleeve (72), respectively, the axial clearance (B) of the transmitting member (82) with respect to the valve housing (30) being greater than the axial clearance (C) of the transmitting member (82) with respect to the sleeve (72.

5. The valve assembly as claimed in claim 1, characterized in that the additional ventilation duct (80) communicates through the additional valve (66, 72) with a pressure air source.

## Revendications

1. Ensemble à soupapes pour commander un servomoteur (10) pneumatique de freinage, comportant
- un carter de soupape (30), dans lequel sont disposés un premier siège de soupape et un deuxième siège de soupape (32, 34),
- un corps de soupape (40) pouvant s'appuyer contre les deux sièges de soupape (32, 34), corps de soupape qui,
-- dans une position d'un organe d'actionnement (38), est soulevé seulement du premier siège de soupape (32), ce qui relie ensemble deux chambres (24, 26) du servomoteur de freinage (10) et les isole toutes deux d'une admission d'air (50), et
-- dans une autre position de l'organe d'actionnement (38), est soulevé seulement du deuxième siège de soupape (34), ce qui isole l'une de l'autre les deux chambres (24, 26) du servomoteur de freinage (10) et relie l'une d'entre elles à l'admission d'air (50), et
- un canal supplémentaire de mise à l'atmosphère (80), qui débouche dans la chambre (26) qui peut être reliée à l'admission d'air (50), du servomoteur de freinage (10), et est commandé par une soupape supplémentaire (66, 72), qui doit s'ouvrir par un mouvement de l'organe d'actionnement (38), mouvement qui dépasse le mouvement nécessaire pour soulever le corps de soupape (40) du deuxième siège de soupape (34),
caractérisé en ce que
- la soupape supplémentaire (66, 72) présente un troisième siège de soupape (66), de forme annulaire, disposé en dehors du carter de soupape (30),
- le carter de soupape (30) est entouré, à une certaine distance radiale, par une douille (72), qui, en formant un corps de soupape supplémentaire, peut coulisser axialement par rapport au carter de soupape (30), et qui est précontrainte dans la direction du troisième siège de soupape,
- le canal supplémentaire de mise à l'atmosphère (80) est réalisé entre le carter de soupape (30) et la douille (72), et
- l'organe d'actionnement (38) est raccordé à la douille (72) par l'intermédiaire d'un organe de transmission (82).

2. Ensemble à soupapes suivant la revendication 1, caractérisé en ce que le troisième siège de soupape (66) est disposé, à une extrémité du carter de soupape (30), au voisinage de l'admission d'air (50), et en ce que le canal supplémentaire de mise à l'atmosphère (80) est alimenté par une zone de l'admission d'air (50), située radialement à l'extérieur.

3. Ensemble à soupapes suivant la revendication 2, caractérisé en ce que le troisième siège de soupape (66) est réalisé, sous la forme d'une bride, sur un insert (60), qui, à l'intérieur du carter de soupape (30), est précontraint dans une direction opposée à la précontrainte de la douille (72), par un ressort (62) s'appuyant sur l'organe d'actionnement (38).

4. Ensemble à soupapes suivant l'une quelconque des revendications 1 à 3, caractérisé en ce que l'organe de transmission (82) est relié de façon fixe au deuxième siège de soupape (34) et traverse, avec des jeux axiaux (B, C), des évidements radiaux (84, 86) prévus l'un dans le carter de soupape (30) et l'autre dans la douille (72), étant entendu que le jeu axial (B) de l'organe de transmission (82) par rapport au carter de soupape (30) est plus grand que le jeu axial (C) de l'organe de transmission (82) par rapport à la douille (72).

5. Ensemble à soupapes suivant la revendication 1, caractérisé en ce que le canal supplémentaire de mise à l'atmosphère (80) est raccordé à une source d'air comprimé par l'intermédiaire de la soupape supplémentaire (66, 72).
